# FASCICULE DE BREVET EUROPEEN

(11) **EP 2 783 180 B1**
(45) Date de publication et mention de la délivrance du brevet: **29.06.2016**
(21) Numéro de dépôt: 12787752.0
(22) Date de dépôt: 20.11.2012
(51) Int. Cl.: F28F 9/02

(54) **BOÎTE COLLECTRICE, NOTAMMENT POUR REFROIDISSEUR DE BATTERIE, ET ÉCHANGEUR DE CHALEUR COMPRENANT AU MOINS UNE TELLE BOÎTE**
VERTEILER, INSBESONDERE FÜR EINEN BATTERIEKÜHLER, UND WÄRMETAUSCHER MIT MINDESTENS EINEM SOLCHEN VERTEILER
MANIFOLD INTENDED, IN PARTICULAR, FOR A BATTERY COOLER, AND HEAT EXCHANGER COMPRISING AT LEAST ONE SUCH MANIFOLD

(30) Priorité: 22.11.2011 FR 1160618
(43) Date de publication de la demande: 01.10.2014
(73) Titulaire: Valeo Systemes Thermiques, 78320 Le Mesnil Saint Denis (FR)
(72) Inventeur: MOREAU, Sylvain, F-72700 Spay (FR); BUSSON, François, F-72220 Saint Gervais En Belin (FR); POURMARIN, Alain, F-72210 La Suze-sur-sarthe (FR); DOUCET, Philippe, F-72300 Sable (FR); IBRAHIMI, Mohamed, F-72700 Allonnes (FR)
(74) Mandataire: Metz, Gaëlle
(86) Numéro de dépôt international: PCT/EP2012/073141
(87) Numéro de publication internationale: WO 2013/076104

(56) Documents cités:
- FR-A1- 2 780 152
- FR-A1- 2 803 376
- JP-A- 11 281 287

## Description

L'invention est du domaine des échangeurs de chaleurs, par exemple des refroidisseurs de batteries, en particulier les batteries d'un véhicule à motorisation électrique et/ou hybride. Elle a pour objet une boîte collectrice conforme au préambule de la revendication 1 ainsi qu'un échangeur muni d'une telle boîte collectrice. Une boîte collectrice de ce type est connue de JP 11261287.

L'énergie électrique des véhicules à motorisation électrique et/ou hybride est fournie par une ou plusieurs batteries. Un problème posé réside dans le fait que durant leurs fonctionnements, les batteries sont amenées à chauffer et risquent ainsi de s'endommager. Il est donc nécessaire d'utiliser des refroidisseurs de batteries afin de les maintenir à une température acceptable. De tels refroidisseurs comprennent un faisceau de tubes reliant entre elles au moins deux boîtes collectrices dans lesquels sont raccordées, de façon fixe et étanche, des extrémités correspondantes des tubes. Un fluide de refroidissement peut alors circuler à travers les tubes et les boîtes collectrices afin d'échanger thermiquement avec les batteries.

Une difficulté à surmonter réside dans le fait de refroidir les batteries de façon efficace, régulée et homogène et ceci pour l'ensemble des batteries. Dans ce but, il a été imaginé de mettre plusieurs refroidisseurs de batteries en série en les connectant à l'aide de plusieurs boîtes collectrices, assemblées et brasées les unes aux autres pour faire le lien entre les différents refroidisseurs. Un inconvénient vient du fait que les boîtes assemblées ensembles sont différentes entre elles et nécessitent donc des procédés de fabrication différents ainsi qu'une gestion logistique adaptée à chacune d'entre elles. En fonction du nombre de batteries que l'on souhaite refroidir, on fait varier le nombre de refroidisseurs mis en série les uns à la suite des autres, ce qui nécessite donc la gestion de nombreuses pièces différentes.

Les refroidisseurs de batteries sont soumis à différents types de contraintes mécaniques provenant du véhicule dans lequel ils sont installés. Dans le cas où le refroidisseur comprend un assemblage de boîtes collectrices de conception différente, une difficulté consiste alors à garantir la rigidité des liaisons entre les boîtes collectrices assemblées entres elles.

Un autre inconvénient vient du fait que les tubes présentent des longueurs différentes en fonctions des boîtes assemblées entres elles qu'ils relient, ce qui nécessite la production et le stockage de tubes de longueurs différentes.

L'invention vise à améliorer la situation.

Elle propose à cet effet une boîte collectrice d'échangeur de chaleur, conforme à l'objet de la revendication 1.

On comprend par indépendant le fait que, du point de vue du fluide, la deuxième chambre est isolée de la première chambre. Autrement dit, le fluide ne peut pas passer directement de la première chambre à la deuxième chambre sans circuler par des passes de l'échangeur. La première et la deuxième chambre sont donc étanches entre elles.

L'invention permet ainsi de proposer deux chambres ou collecteurs de circulation de fluide distinctes mais regroupées au sein d'une boîte collectrice unique. Les boîtes collectrices sont alors standardisées. L'invention permet de s'affranchir des inconvénients liés à la présences de boîtes collectrices de conception et/ou de structure différentes devant être assemblées ensemble. Un autre avantage vient de la réduction de l'encombrement de la boîte collectrice de l'invention, ne comprenant que trois plaques. Les plaques formant la boîte collectrice sont en outre conçues pour être assemblées ensemble de façon à garantir une rigidité suffisante à la résistance aux contraintes mécaniques que subit l'échangeur.

Un autre avantage vient du montage de la boîte collectrice de l'invention qui nécessite moins d'opérations que la solution connue. En effet, grâce à l'invention, il n'est plus nécessaire de fabriquer deux boîtes collectrices distinctes avant de les assembler entre elles. Il suffit d'assembler ensemble le couvercle, la plaque intermédiaire et la plaque collectrice.

Selon un aspect de l'invention, la plaque intermédiaire présente une première face et une deuxième face opposée à la première et comprend une première déformation destinée à l'entrée du fluide dans la première chambre et une deuxième déformation destinée à la sortie du fluide de la première chambre. La première et la deuxième déformation sont situées, notamment, au niveau d'extrémités longitudinales opposées de la plaque intermédiaire.

Avantageusement, la plaque intermédiaire comprend une troisième déformation, située entre la première et la deuxième déformations selon une direction longitudinale de la boîte collectrice. Elle autorise la circulation du fluide, notamment, entre la première et la deuxième déformations.

Selon un exemple de réalisation, la troisième déformation fait saillie par rapport à la première face de la plaque intermédiaire, la première et la deuxième déformations de la plaque intermédiaire faisant saillie par rapport à la deuxième face de la plaque intermédiaire. Autrement dit, la première et la deuxième déformations s'étendent selon un premier sens et la troisième déformation s'étend selon un deuxième sens opposé au premier sens.

Selon un aspect de l'invention, le couvercle comprend une cavité, apte à autoriser la circulation du fluide entre la première déformation et la deuxième déformation. La troisième déformation s'étend, par exemple, dans la cavité.

Avantageusement, le couvercle comprend un bord, situé en périphérie de la cavité et disposé au contact d'une bordure de la plaque intermédiaire entourant les première, deuxième et troisième déformations. Le bord est, par exemple, brasé à la bordure de la première face.

Selon un exemple de réalisation, le couvercle est disposé en vis-à-vis de la première face de la plaque intermédiaire, dans une position de recouvrement des première, deuxième et troisième déformations.

Selon un aspect de l'invention, la plaque collectrice est disposé en vis-à-vis de la deuxième face de la plaque intermédiaire, dans une position de recrouvrement de la troisième déformation.

Avantageusement, la plaque collectrice comprend un enfoncement destiné à l'entrée et la sortie du fluide dans la deuxième chambre.

Selon un exemple de réalisation, la plaque collectrice comprend une face périphérique entourant l'enfoncement et est disposée au contact d'une bordure entourant la troisième déformation de la plaque intermédiaire. La face périphérique est, notamment, brasée à la bordure de la deuxième face.

Selon un aspect de l'invention, la première déformation, la deuxième déformation et l'enfoncement comprennent chacun au moins une fente apte à recevoir un tube de circulation du fluide.

Avantageusement, le couvercle, la plaque intermédiaire et la plaque collectrice sont de forme sensiblement rectangulaire, lesdites fentes présentant une forme allongée selon une direction sensiblement parallèle à un axe longitudinale du couvercle, de la plaque intermédiaire et de la plaque collectrice.

Selon un exemple de réalisation, les fentes de la première déformation, de la deuxième déformation et de l'enfoncement comprennent une ouverture vers l'extérieur de ladite boîte collectrice situées sensiblement dans un même plan. Ainsi, grâce à l'invention, il est possible de connecter des tubes de même longueur à la première et à la deuxième chambre.

L'invention concerne aussi un échangeur de chaleur, notamment un refroidisseur de batterie, comprenant au moins une boîte collectrice telle que définie précédemment.

Selon un aspect de l'invention, l'échangeur comprend un faisceau de tubes de circulation du fluide, lesdits tubes étant de même longueur et possédant une première extrémité longitudinale pénétrant dans ladite boîte collectrice. On comprend ici que les tubes sont de même longueur à la tolérance de fabrication près. Grâce à l'invention, il est nécessaire de fabriquer des tubes d'une seule longueur, se qui permet de simplifier la logistique de gestion des tubes. Avantageusement, les tubes sont extrudés et comportent une pluralité de canaux.

Selon un exemple de réalisation, les tubes présentent une forme sensiblement oblongue délimitée par deux grandes faces, dites première et deuxième grandes faces, et deux petites faces, les tubes étant agencés pour que les premières grandes faces s'étendent dans un même plan. Il est ainsi possible de disposer des batteries directement sur la partie du tube la plus grande en terme de surface, c'est-à-dire la première grande face.

Selon un aspect de l'invention, dans lequel la première et la deuxième chambre reçoivent chacune quatre tubes.

Avantageusement, l'échangeur est agencé pour faire circuler le fluide dans la première chambre selon une première direction et dans la deuxième chambre selon une deuxième direction de sens opposé à la première. Grâce à cette disposition des deux chambres, le fluide peut entrer et sortir du même coté de l'échangeur.

Selon un exemple de réalisation, l'échangeur comprend une boîte d'entrée comportant une entrée du fluide, une boîte de sortie, comportant une sortie du fluide et une boîte intermédiaire, de sorte que ledit échangeur définit quatre passes du fluide : une première passe entre la boîte d'entrée et la première chambre, une deuxième passe entre la première chambre et la boîte intermédiaire, une troisième passe entre la boîte intermédiaire et la deuxième chambre et une quatrième passe entre la deuxième chambre et la boîte de sortie. De cette manière, on forme un seul échangeur en connectant deux échangeurs plus petits entre eux. De la même manière il est ainsi possible de connecter de nombreux échangeurs en séries, pour n'en former qu'un seul comprenant plusieurs boîtes collectrices selon l'invention.

L'invention concerne aussi un procédé de fabrication d'une boîte collectrice d'échangeur de chaleur, ladite boîte collectrice comprenant un couvercle, une plaque intermédiaire et une plaque collectrice. Selon l'invention, on emboutit le couvercle, la plaque intermédiaire et la plaque collectrice, et on forme un moyen de liaison mécanique sécable entre le couvercle, la plaque intermédiaire et la plaque collectrice selon une même étape de formage.

Grâce à l'invention, en plus de n'avoir qu'une seule boîte collectrice au lieu de deux, les pièces constituants la boîte collectrice étant obtenues en une seule étape de fabrication. Elles sont de plus liées entre elles simultanément à leur fabrication de sorte qu'elles sont stockables et transportables ensembles.

Selon un aspect de l'invention on casse le moyen de liaison mécanique préalablement à un assemblage du couvercle sur la plaque intermédiaire et de la plaque collectrice sur la plaque intermédiaire en vue de former ladite boîte collectrice. On casse ce moyen de liaison afin de positionner le couvercle, la plaque intermédiaire et la plaque collectrice les uns sur les autres de sortes qu'ils sont aptes à être brasés entre eux.

Les figures annexées feront bien comprendre comment l'invention peut être réalisée. Sur ces figures, des références identiques désignent des éléments semblables.
La figure 1 est une vue schématique en plan d'un exemple de réalisation d'un échangeur de chaleur comprenant une boîte collectrice de l'invention.
La figure 2 est une vue en perspective éclatée d'une boîte collectrice de l'invention.
La figure 3 est une vue en perspective d'une variante de réalisation de l'échangeur représenté à la figure 1.
La figure 4 est une vue en perspective éclatée d'une boîte collectrice de l'invention et de moyen de liaison sécable liant un couvercle, une plaque intermédiaire et une plaque collectrice de la boîte collectrice.

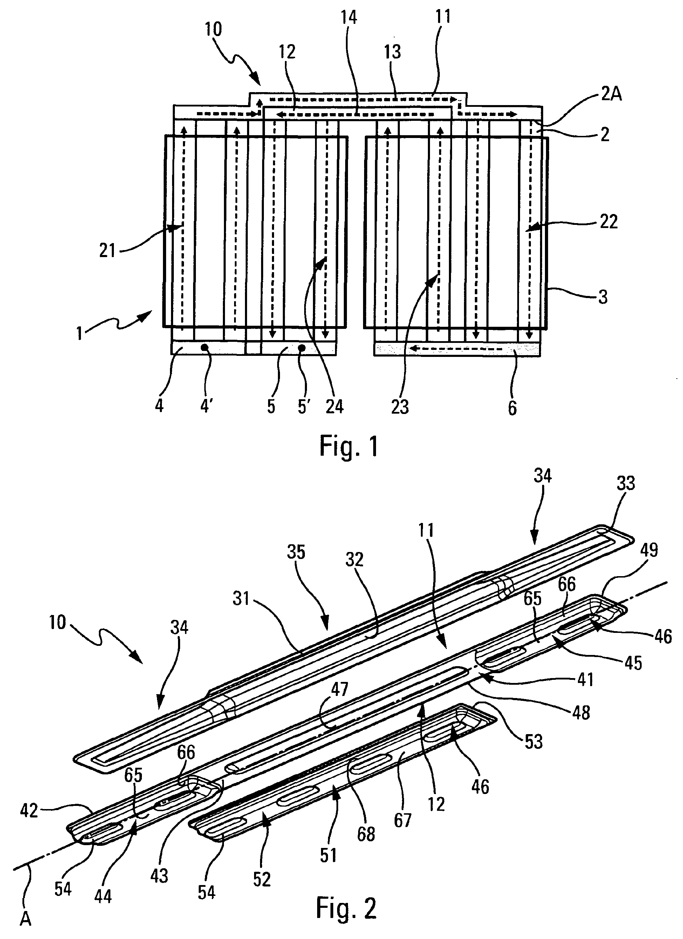

L'invention trouve son application dans un échangeur de chaleur 1 tel que représenté sur la figure 1. Il s'agit, par exemple, d'un radiateur de refroidissement de batteries d'un véhicule automobile, fonctionnant, notamment sur une boucle de circulation d'un liquide de refroidissement, d'un fluide réfrigérant ou d'un fluide frigorigène connu par exemple sous l'acronyme R134a ou R744 (dioxyde de carbone). Il comprend un faisceau de tubes parallèles 2. Les tubes 2 sont de même longueur et possèdent chacun une première extrémité longitudinale 2A reliée, de manière fixe et étanche, à une boîte collectrice 10, dite première boîte collectrice 10, conforme à l'invention et située en haut sur la figure 1. Les tubes 2 sont, par exemple, brasés à la première boîte collectrice 10. Cette dernière est destinée à collecter le fluide qui arrive depuis les tubes 2, c'est-à-dire qu'elle comprend une zone au niveau de laquelle le fluide est amené à entrer dans la première boîte collectrice. Elle est aussi destinée à répartir le fluide dans les tubes 2, c'est-à-dire qu'elle comprend une zone au niveau de laquelle le fluide est amené à sortir de la première boîte collectrice 10. Les tubes 2 sont, par exemple, extrudés et comprennent une pluralité de canaux afin, notamment, d'améliorer l'efficacité thermique et la tenu en pression des tubes 2. L'échangeur 1 permet ainsi de refroidir des batteries 3 en les disposant ici directement sur les tubes 2.

Un tel échangeur 1 comprend également une boîte d'entrée 4, comportant une entrée 4' par laquelle s'introduit le fluide dans l'échangeur 1, une boîte de sortie 5, comportant une sortie 5' par laquelle s'évacue le fluide de l'échangeur 1, et une boîte intermédiaire 6. Ici la boîte d'entrée 4 et la boîte de sortie 5 ne forment qu'une seule boîte mais elles pourraient être distinctes l'une de l'autre.

La première boîte collectrice 10 conforme à l'invention définit une première chambre 11 et une deuxième chambre 12 de circulation du fluide, indépendantes l'une de l'autre. Autrement dit, la première boîte collectrice 10 définit un premier collecteur et un deuxième collecteur de circulation du fluide ne communiquant pas directement entre eux.

Ainsi, dans ce mode de réalisation, le fluide entre dans l'échangeur 1 au niveau de l'entrée 4' de la boîte d'entrée 4 et parcourt ensuite une première passe 21 définie ici par deux tubes 2 reliant la boîte d'entrée à la première chambre 11. Il pénètre alors dans la première chambre 11, circule à l'intérieur de celle-ci et en ressort pour parcourir une deuxième passe 22, par exemple définie par deux tubes 2, reliant la première chambre 11 à la boîte intermédiaire 6. Le fluide circule alors à l'intérieur de la boîte intermédiaire 6 avant d'en sortir pour parcourir une troisième passe 23, notamment définie par deux tubes 2, reliant la boîte intermédiaire 6 à la deuxième chambre 12. Il circule ensuite à l'intérieur de la deuxième chambre et sort pour parcourir une quatrième passe 24 l'emmenant de la deuxième chambre 12 à la boîte de sortie 5 et à sa sortie 5'.

L'échangeur 1 est ainsi agencé pour faire circuler le fluide dans la première chambre 11 selon une première direction représenté par la flèche référencée 13 et dans la deuxième chambre 12 selon une deuxième direction représentée par la flèche référencée 14, de sens opposé à la première. Cette disposition permet alors de mettre plusieurs échangeurs en séries, ici deux, afin, notamment, de refroidir plusieurs batteries tout en proposant une entrée 4' et une sortie 5' du fluide du même coté de l'échangeur 1 et, en particulier, adjacentes. Cette disposition de l'entrée 4' et de la sortie 5' facilite la gestion de l'espace nécessaire à l'intégration de l'échangeur 1 dans le véhicule, notamment l'espace nécessaire pour raccorder à l'échangeur 1 des éléments d'entrée et de sortie. De tels éléments (non représentés) sont, par exemple, des tubulures et peuvent ainsi être connectées du même coté de l'échangeur 1 de manière à limiter l'encombrement engendré par ces éléments.

La figure 2 permet d'illustrer plus en détail la première boîte collectrice 10 conforme à l'invention. Elle comprend un couvercle 31, une plaque intermédiaire 41 et une plaque collectrice 51. Selon l'invention, la plaque intermédiaire 41 définit avec le couvercle 31 la première chambre 11 du fluide et avec la plaque collectrice 51 la deuxième chambre 12 du fluide.

La plaque intermédiaire 41 présente une première face 42 et une deuxième face 43 opposée à la première face 42. La plaque intermédiaire 41 comprend une première déformation 44 destinée à faire entrer le fluide dans la première chambre 11 et une deuxième déformation 45 agencée pour évacuer le fluide de la première chambre 11. Les première et deuxième déformations 44, 45 sont, par exemple, obtenues par un procédé d'emboutissage de la plaque intermédiaire 41 et forment ainsi des emboutis. La première et la deuxième déformations 44, 45 font ici saillie par rapport à la deuxième face 43 de la plaque intermédiaire 41, c'est-à-dire qu'elles sont situées du coté de la deuxième face 43 de la plaque intermédiaire 41. Elles comprennent par exemple un fond 65, qui s'étend parallèlement à la deuxième face 42 et relié à elle par une paroi périphérique 66 qui s'étend perpendiculairement à la deuxième face 42.

Les premières et deuxième déformations 44, 45, comprennent, par exemple, des fentes 46 destinées à recevoir la première extrémité longitudinale des tubes 2. Ces fentes 46 sont, par exemple, oblongues, c'est-à-dire qu'elles présentent une forme allongée selon une direction A d'extension longitudinale du couvercle 31, de la plaque intermédiaire 41 et de la plaque collectrice 51. Le couvercle 31, la plaque intermédiaire 41 et la plaque collectrice 51 sont en effet de forme sensiblement rectangulaire de sorte qu'ils possèdent une dimension d'extension longitudinale selon la direction référencée A sur la figure 2 et une direction d'extension latérale, perpendiculaire à la direction A. On peut noter que la première et la deuxième déformations 44, 45 comprennent ici chacune deux fentes 46, mais dans une variante de réalisation, elles pourraient comprendre plus ou moins de fentes 46.

La plaque intermédiaire 41 comprend également une troisième déformation 47, située entre la première et la deuxième déformations 44, 45 selon la direction d'extension longitudinale A des plaques. Cette troisième déformation 47 est, par exemple obtenue par un procédé d'emboutissage de sorte qu'elle forme un embouti. Elle fait saillie par rapport à la première face 42 de la plaque intermédiaire 41, c'est-à-dire qu'elle se situe du coté de la première face 42 de la plaque intermédiaire. La troisième déformation 47 s'étend alors à l'intérieur de la première chambre 11. Le fluide peut ainsi circuler dans la première chambre 11 entre la première et la deuxième déformations 44, 45, en passant par la troisième déformation 47.

La déformation 47 permet avantageusement d'optimiser les volumes des chambres 11 et 12. Une telle déformation 47 permet d'équilibrer les sections de passage du fluide dans les chambres 11 et 12. Elle permet en outre, en modifiant la profondeur de la déformation 47 d'obtenir une valeur optimisée de perte de charge. De manière avantageuse encore, les sections de passage du fluide au travers des chambres 11 et 12 sont sensiblement identiques les unes aux autres.

Le couvercle 31 est en vis-à-vis de la première face 42 de la plaque intermédiaire 41. Il couvre la première, la deuxième et la troisième déformation 44, 45, 47. Le couvercle 31 comprend une cavité 32, apte à autoriser la circulation du fluide entre la première déformation 44 et la deuxième déformation 45 de la plaque intermédiaire 41. La cavité 32 est, notamment, obtenue par emboutissage de sorte qu'elle forme un embouti. C'est en particulier la cavité 32 qui se trouve en vis-à-vis de la première déformation 44, de la deuxième déformation 45 et de la troisième déformation 47. La cavité 32 est de forme évasée au niveau de parties latérales 34 de la cavité 32, c'est-à-dire des parties situées en face de la première et de la deuxième déformations 44, 45. Les parties latérales 34 de la cavité 32 sont évasées vers l'intérieur de la cavité 32, c'est-à-dire vers un axe de symétrie du couvercle perpendiculaire à la direction A d'extension longitudinale. Une partie centrale 35 de la cavité 32, c'est-à-dire une partie située en face de la troisième déformation 47, est plus profonde que les parties latérales de la cavité 32. La partie centrale 35 de la cavité 32 est ménagée entre les parties latérales 34. Grâce au couvercle 31 et en particulier grâce à sa cavité 32, le fluide peut circuler dans la première chambre 11, notamment à l'intérieur de la cavité 32, depuis la première déformation 44 par laquelle le fluide entre jusqu'à la deuxième déformation 45 par laquelle le fluide sort de la première chambre 11.

Le couvercle 32 comprend un bord 33, situé en périphérie de la cavité 32 et au contact d'une bordure 49 de la première face 42 de la plaque intermédiaire 41 entourant les première, deuxième et troisième déformations 44, 45, 47. Le brasage entre le couvercle 31 et la plaque intermédiaire 41 se fait en particulier au niveau du bord 33 du couvercle 31 et de la bordure 49 de la première face 42 de la plaque intermédiaire 41. Le bord 33 est, notamment, de forme complémentaire à la bordure 49 de la première face 41 et ils sont, par exemple, plats.

La plaque collectrice 51 est en vis-à-vis de la deuxième face 43 de la plaque intermédiaire 41, notamment au niveau de la troisième déformation 47. La plaque collectrice 51 forme ainsi avec l'intérieur de la troisième déformation 47, une partie de la deuxième chambre 12 de circulation du fluide.

La plaque collectrice 51 comprend un enfoncement 52 destiné à faire entrer et à évacuer le fluide de la deuxième chambre 12. L'enfoncement 52 est, notamment, similaire à la première et à la deuxième déformations 44, 45 de la plaque intermédiaire 41. La première déformation 44, la deuxième déformation 45 et l'enfoncement 52 s'étendent ainsi du même coté par rapport à la plaque intermédiaire 41, c'est-à-dire du coté de la première face 42 et possèdent sensiblement la même profondeur par rapport à la plaque intermédiaire 41.

La plaque collectrice 51 comprend ici une face périphérique 53 entourant l'enfoncement 52 et au contact d'une bordure 48 de la deuxième face 43 de la plaque intermédiaire 41. Le brasage entre la plaque collectrice 51 et la plaque intermédiaire 41 se fait en particulier au niveau de la face périphérique 53 de la plaque collectrice 51 et de la bordure 48 de la deuxième face 43 de la plaque intermédiaire 41. La face périphérique 53 est, notamment, de forme complémentaire à la bordure 48 de la deuxième face 43 et, par exemple, plate.

L'enfoncement 52 comprend, par exemple, un fond 67 qui s'étend parallèlement à la face périphérique 53 et dans le même plan que celui dans lequel s'étend le fond 65 de la première et de la deuxième déformations 44, 45. Le fond 67 de l'enfoncement 52 est reliée à la face périphérique 53 par une paroi périphérique 68 identique à la paroi périphérique 66 de la première et de la deuxième déformations 44, 45.

L'enfoncement 52 comprend également quatre fentes 46 destinées à recevoir les extrémités des tubes. En particulier, l'enfoncement 52 comprend deux fentes, situées à gauche sur la figure 2, par lesquelles le fluide sort de la deuxième chambre 12 et deux fentes 43, situées à droite sur la figure 2, par lesquelles le fluide entre dans la deuxième chambre 12. Autrement dit, l'enfoncement 52 comprend deux fentes 46 destinées à recevoir des tubes amenant le fluide dans la deuxième chambre 12 et deux fentes 46 destinées à recevoir des tubes évacuant le fluide de la deuxième chambre 12.

Les fentes 46 de la première déformation 44, de la deuxième déformation 45 et de l'enfoncement 52 comprennent une ouverture 54 vers l'extérieur de ladite boîte située au niveau des fonds respectifs 65, 67 de la première déformation 44, de la deuxième déformation 45 et de l'enfoncement 52. Autrement dit, les ouvertures 54 se situent sensiblement dans un même plan, par exemple parallèle à un plan dans lequel s'étend la bordure 49 de la première face 42, et notamment parallèle à un plan d'extension du couvercle 31, de la plaque intermédiaire 41 ou de la plaque collectrice 51. C'est par l'ouverture 54 que les tubes sont insérés dans les fentes 46. Les fentes 46 s'étendent, par exemple, selon une même profondeur dans une direction perpendiculaire aux plans d'extension des plaques et débouchent à l'intérieur de la première chambre 11 et de la deuxième chambre 12 au niveau de deuxièmes ouvertures, non visibles, qui s'étendent elles aussi selon un même plan. On forme ainsi un anneau de réception des tubes pour faciliter le brasage de ces derniers sur la première boîte collectrice 10.

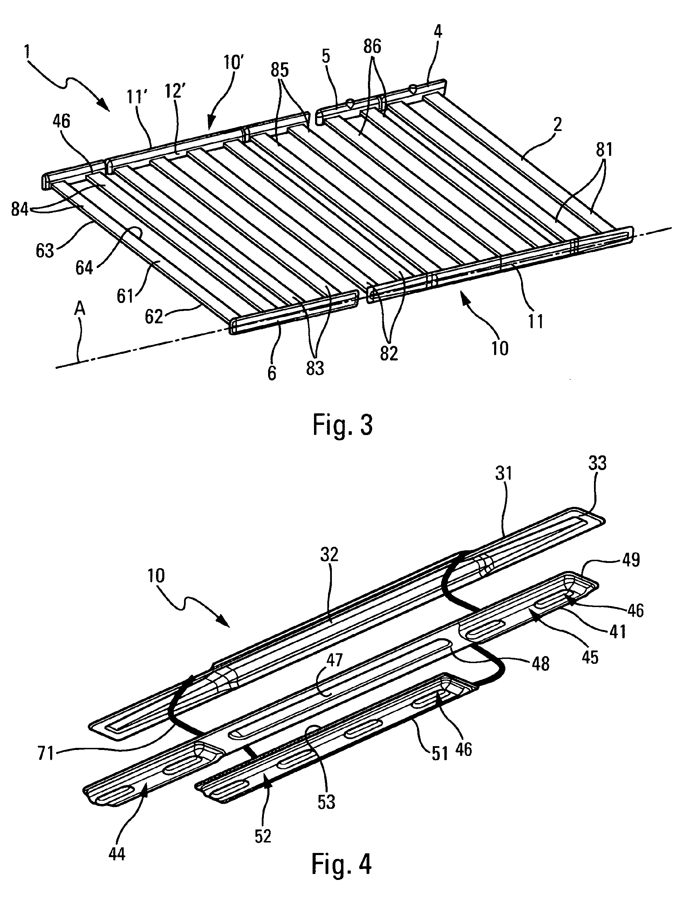

Une variante de réalisation de l'échangeur 1 selon l'invention est représentée sur la figure 3. Un tel échangeur 1 comprend une deuxième boîte collectrice 10' identique à la première boîte collectrice 10. Cette variante permet de connecter en série vu du fluide un échangeur supplémentaire afin d'agrandir la zone disponible pour échanger thermiquement avec les batteries.

L'échangeur 1 définit ici six passes pour le fluide, chacune d'entre elles étant, notamment définie par deux tubes 2 :
- une première passe 81 entre la boîte d'entrée 4 et la première chambre de la première boîte collectrice 10,
- une deuxième passe 82 entre la première chambre 11 de la première boîte collectrice 10 et la deuxième chambre 12' de la deuxième boîte collectrice 10',
- une troisième passe 83 entre la deuxième chambre 12' de la deuxième boîte collectrice 10' et la boîte intermédiaire 6,
- une quatrième passe 84 entre la boîte intermédiaire et la première chambre 11' de la deuxième boîte collectrice 10',
- une cinquième passe 85 entre la première chambre 11' de la deuxième boîte collectrice 10' et la deuxième chambre de la première boîte collectrice 10 et
- une sixième passe 86 entre la deuxième chambre de la première boîte collectrice 10 et la boîte de sortie 5.

La première boîte collectrice 10 et la boîte intermédiaire 6 reçoivent ici les premières extrémités longitudinales des tubes 2. La deuxième boîte collectrice 10', la boîte d'entrée 4 et la boîte de sortie 5 reçoivent, notamment, des deuxièmes extrémités longitudinales des tubes 2, opposées aux premières extrémité par rapport aux tubes 2. On peut noter que grâce au positionnement des fentes 46 et en particulier de leurs ouvertures, les tubes 2 présentent une même longueur.

Les tubes 2 comprennent deux grandes faces, dites première et deuxième grandes faces 61, 62, et deux petites faces 63, 64 reliant les grandes faces 61, 62 entre elles. Les petites et les grandes faces 61, 62, 63, 64 relient entre elles les extrémités longitudinales des tubes 2 de sorte que les tubes 2 présentent une forme sensiblement oblongue. Grâce à la direction A d'allongement des fentes 46, la pluralité de tubes 2 constituant le faisceau de tubes est agencée pour que les premières grandes faces 61 des tubes 2 s'étendent dans un même plan, notamment, perpendiculaire à la dimension d'extension latérale du couvercle, de la plaque intermédiaire et de la plaque collectrice. Il est ainsi possible de disposer les batteries directement sur les grandes faces 61 des tubes 2 de manière à bénéficier d'une grande surface de contact entre les tubes 2 et les batteries.

La figure 4 représente la première boîte collectrice 10, avant assemblage et obtenue à la suite d'un procédé de fabrication selon l'invention.

Ce procédé prévoit que l'on emboutit et l'on découpe selon une même étape de formage une tôle afin d'obtenir d'une part le couvercle 31, la plaque intermédiaire 41 et la plaque collectrice 51 et d'autre part un lien mécanique 71 sécable liant le couvercle 31, la plaque intermédiaire 41 et la plaque collectrice 51 entre eux.

L'emboutissage du couvercle 31, de la plaque 41 et de la plaque collectrice 51 permet d'obtenir, notamment, la cavité 32, les première, deuxième et troisième déformations 44, 45, 47, l'enfoncement 52 et les fentes 46 décrits précédemment.

Le moyen de liaison mécanique 71 sécable se présente ici sous forme de bandelettes du même matériaux que la première boîte collectrice 10. Dans l'exemple illustré, deux bandelettes lient le couvercle 31 à la plaque intermédiaire 41 et deux bandelettes lient la plaque intermédiaire à la plaque collectrice 51.

L'invention prévoit également une étape dans laquelle on casse le moyen de liaison 71. On casse ici les bandelettes, par exemple, en les pliant au niveau de jonctions avec le couvercle 31, la plaque collectrice 41 et/ou la plaque intermédiaire 51, c'est-à-dire à la limite du bord 33 du couvercle 31, de la bordure 49 de la première face de la plaque intermédiaire 41, de la bordure 48 de la deuxième face de la plaque intermédiaire 41 et/ou de la face périphérique 53 de la plaque collectrice 51. Le couvercle 31, la plaque intermédiaire 41 et la plaque collectrice 51 sont alors séparés les un des autres et il est possible de les positionner les uns sur les autres de sortes qu'ils sont aptes à être brasés entre eux.

Une telle solution permet de stocker unitairement un ensemble de trois composants, c'est-à-dire le couvercle 31, la plaque intermédiaire 41 et la plaque collectrice 51, en vue de leur assemblage puis de leur brasage. Il n'est alors pas nécessaire de gérer un stock spécifique pour chaque composant.

Selon une variante de réalisation du procédé (non représenté), l'invention prévoit de réaliser la plaque collectrice entre le couvercle et la plaque intermédiaire, c'est-à-dire que la plaque collectrice est localisée sur la tôle entre le couvercle et la plaque intermédiaire pendant l'opération de formage. Les moyens de liaisons s'étendent ici entre la plaque collectrice et la plaque intermédiaire d'une part et entre la plaque collectrice et le couvercle d'autre part. Ainsi, du fait de la longueur de la plaque collectrice qui se trouve être de dimension inférieure au couvercle et à la plaque intermédiaire, l'opération de formage permet de réaliser en concomitance la plaque collectrice, le couvercle et la plaque intermédiaire. Il est ainsi rendu possible d'utiliser la matière issue des parties de tôle entourant la plaque collectrice pour fluer vers les parties de tôle utilisées pour le couvercle et la plaque intermédiaire. Un tel agencement de la plaque collectrice, de la plaque intermédiaire et du couvercle permet avantageusement de maintenir sensiblement une même épaisseur de matière.

Les différents composants de l'échangeur et notamment de la ou des boîtes collectrices sont, par exemple, en aluminium ou alliage d'aluminium.

## Revendications

1. Boîte collectrice (10, 10') d'échangeur de chaleur (1), comprenant un couvercle (31), une plaque intermédiaire (41) et une plaque collectrice (51), ladite boîte collectrice (10) étant destinée à collecter et à répartir un fluide, la plaque intermédiaire (41) définissent avec le couvercle (31) une première chambre (11) du fluide et avec la plaque collectrice (51) une deuxième chambre (12) du fluide, indépendante de la première (11), la boîte collectrice étant **caractérisée en ce que** la plaque intermédiaire (41) comporte au moins deux fentes (46), chacune des fentes étant destinée à recevoir une extrémité longitudinale d'un tube (2) de l'échangeur de chaleur (1).

2. Boîte collectrice (10, 10') selon la revendication 1, dans laquelle la plaque intermédiaire (41) présente une première face (42) et une deuxième face (43) opposée à la première (42) et comprend une première déformation (44) destinée à l'entrée du fluide dans la première chambre (11) et une deuxième déformation (45) destinée à la sortie du fluide de la première chambre (11).

3. Boîte collectrice (10, 10') selon la revendication 2, dans laquelle la plaque intermédiaire (41) comprend une troisième déformation (47), située entre la première et la deuxième déformations (44, 45) selon une direction longitudinale (A) de la boîte collectrice (10).

4. Boîte collectrice (10, 10') selon la revendication 3, dans laquelle, la troisième déformation (47) fait saillie par rapport à la première face (42) de la plaque intermédiaire (41), la première et la deuxième déformations (44, 45) de la plaque intermédiaire (41) faisant saillie par rapport à la deuxième face (43) de la plaque intermédiaire (41).

5. Boîte collectrice (10, 10') selon la revendication 3 ou 4, dans laquelle le couvercle (31) comprend une cavité (32), apte à autoriser la circulation du fluide entre la première déformation (44) et la deuxième déformation (45).

6. Boîte collectrice (10, 10') selon la revendication 5, dans laquelle le couvercle (31) comprend un bord (33), situé en périphérie de la cavité (32) et disposé au contact d'une bordure (49) de la plaque intermédiaire (41) entourant les première, deuxième et troisième déformations (44, 45, 47).

7. Boîte collectrice (10, 10') selon l'une quelconque des revendications 3 à 6, dans laquelle le couvercle (31) est disposé en vis-à-vis de la première face (42) de la plaque intermédiaire (41), dans une position de recouvrement des première, deuxième et troisième déformations (44, 45, 47).

8. Boîte collectrice (10, 10') selon l'une quelconque des revendications 3 à 7, dans laquelle la plaque collectrice (51) est disposée en vis-à-vis de la deuxième face (43) de la plaque intermédiaire (41), dans une position de recouvrement de la troisième déformation (47).

9. Boîte collectrice (10, 10') selon l'une quelconque des revendications 3 à 8, dans laquelle la plaque collectrice (51) comprend un enfoncement (52) destiné à l'entrée et la sortie du fluide dans la deuxième chambre (12).

10. Boîte collectrice (10, 10') selon la revendication 9, dans laquelle la plaque collectrice (10) comprend une face périphérique (53) entourant l'enfoncement (52) et est disposée au contact d'une bordure entourant la troisième déformation (47) de la plaque intermédiaire (41).

11. Boîte collectrice (10, 10') selon la revendication 9 ou 10, dans laquelle la première déformation (44), la deuxième déformation (45) et l'enfoncement (52) comprennent chacun au moins une fente (46) apte à recevoir un tube (2) de circulation du fluide.

12. Boîte collectrice (10 ,10') selon la revendication 11, dans laquelle le couvercle, (31), la plaque intermédiaire (41) et la plaque collectrice (51) sont de forme sensiblement rectangulaire, lesdites fentes (46) présentant une forme allongée selon une direction sensiblement parallèle à un axe longitudinale (A) du couvercle (31), de la plaque intermédiaire (41) ou de la plaque collectrice (51).

13. Echangeur de chaleur 1) **caractérisé par le fait qu'**il comprend au moins une boîte collectrice (10, 10') selon l'une quelconque des revendications précédentes.

14. Echangeur (1) selon la revendication 13, dans lequel ledit échangeur comprend un faisceau de tubes (2) de circulation du fluide, lesdits tubes (2) étant de même longueur et possédant une première extrémité longitudinale (2A) pénétrant dans ladite boîte collectrice (10, 10').

15. Echangeur (1) selon la revendication 14, dans lequel les tubes (2) sont extrudés et comportent une pluralité de canaux.

16. Echangeur (1) selon la revendication 14 ou 15, dans lequel les tubes (2) présentent une forme sensiblement oblongue délimitée par deux grandes faces, dites première et deuxième grandes faces (61, 62), et deux petites faces (63, 64), les tubes (2) étant agencés pour que les premières grandes faces (61) s'étendent dans un même plan.

17. Echangeur (1) selon l'une quelconque des revendications 13 à 16, dans lequel ledit échangeur (1) est agencé pour faire circuler le fluide dans la première chambre (11) selon une première direction (13) et dans la deuxième chambre (12) selon une deuxième direction (14) de sens opposé à la première (13).

18. Echangeur (1) selon l'une quelconque des revendications 13 à 17, dans lequel l'échangeur (1) comprend une boîte d'entrée (4) comportant une entrée (4') du fluide, une boîte de sortie (5), comportant une sortie (5') du fluide et une boîte intermédiaire (6), de sorte que ledit échangeur (1) définit quatre passes (21, 22, 23, 24) du fluide : une première passe (21) entre la boîte d'entrée (4) et la première chambré (11), une deuxième passe (22) entre la première chambre (11) et la boîte intermédiaire (6), une troisième passe (23) entre la boîte intermédiaire (6) et la deuxième chambre (12) et une quatrième passe (24) entre la deuxième chambre (12) et la boîte de sortie (5).

19. Procédé de fabrication d'une boîte collectrice (10, 10') d'échangeur de chaleur (1) conforme à l'une quelconque des revendications 1 à 12, ladite boîte collectrice (10, 10') comprenant un couvercle (31), une plaque intermédiaire (41) et une plaque collectrice (51), la plaque intermédiaire (41) étant destinée à définir avec le couvercle (31) une première chambre (11) du fluide et avec la plaque collectrice (51) une deuxième chambre (12) du fluide, indépendante de la première (11), **caractérisé par le fait qu'**on emboutit le couvercle (31), la plaque intermédiaire (41) et la plaque collectrice (51), et qu'on forme un moyen de liaison mécanique (71) sécable entre le couvercle (31), la plaque intermédiaire (41) et la plaque collectrice (51) selon une même étape de formage.

20. Procédé selon la revendication 19, dans lequel on casse le moyen de liaison mécanique (71) préalablement à un assemblage du couvercle (31) sur la plaque intermédiaire (41) et de la plaque collectrice (51) sur la plaque intermédiaire (41) en vue de former ladite boîte collectrice (10, 10').

## Patentansprüche

1. Sammelkasten (10, 10') eines Wärmetauschers (1), der einen Deckel (31), eine Zwischenplatte (41) und eine Sammelplatte (51) umfasst, wobei der Sammelkasten (10) dazu bestimmt ist, ein Fluid zu sammeln und zu verteilen, wobei die Zwischenplatte (41) mit dem Deckel (31) eine erste Kammer (11) des Fluids definiert und mit der Sammelplatte (51) eine zweite Kammer (12) des Fluids, die von der ersten Kammer (11) unabhängig ist, Sammelkasten, **dadurch gekennzeichnet, dass** die Zwischenplatte (41) mindestens zwei Schlitze (46) umfasst, wobei jeder der Schlitze dazu bestimmt ist, ein Längsende eines Rohrs (2) des Wärmetauschers (1) aufzunehmen.

2. Sammelkasten (10, 10') nach Anspruch 1, wobei die Zwischenplatte (41) eine erste Seite (42) und eine zweite Seite (43), die der ersten Seite (42) entgegengesetzt ist, aufweist, und eine erste Verformung (44) umfasst, die für den Eingang des Fluids in die erste Kammer (11) bestimmt ist, und eine zweite Verformung (45), die für den Ausgang des Fluids aus der ersten Kammer (11) bestimmt ist.

3. Sammelkasten (10, 10') nach Anspruch 2, wobei die Zwischenplatte (41) eine dritte Verformung (47) umfasst, die zwischen der ersten und der zweiten Verformung (44, 45) entlang einer Längsrichtung (A) des Sammelkastens (10) liegt.

4. Sammelkasten (10, 10') nach Anspruch 3, wobei die dritte Verformung (47) in Bezug zu der ersten Seite (42) der Zwischenplatte (41) vorsteht, wobei die erste und die zweite Verformung (44, 45) der Zwischenplatte (41) in Bezug auf die zweite Seite (43) der Zwischenplatte (41) vorstehen.

5. Sammelkasten (10, 10') nach Anspruch 3 oder 4, wobei der Deckel (31) einen Hohlraum (32) umfasst, der geeignet ist, das Zirkulieren des Fluids zwischen der ersten Verformung (44) und der zweiten Verformung (45) zu gestatten.

6. Sammelkasten (10, 10') nach Anspruch 5, wobei der Deckel (31) einen Rand (33) umfasst, der sich am Umfang des Hohlraums (32) befindet und in Berührung mit einer Einfassung (49) der Zwischenplatte (41), die die erste, zweite und dritte Verformung (44, 45, 47) umgibt, angeordnet ist.

7. Sammelkasten (10, 10') nach einem der Ansprüche 3 bis 6, wobei der Deckel (31) gegenüber der ersten Seite (42) der Zwischenplatte (41) in einer Abdeckungsposition der ersten, zweiten und dritten Verformung (44, 45, 47) angeordnet ist.

8. Sammelkasten (10, 10') nach einem der Ansprüche 3 bis 7, wobei die Sammelplatte (51) gegenüber der zweiten Seite (43) der Zwischenplatte (41) in einer Abdeckungsposition der dritten Verformung (47) angeordnet ist.

9. Sammelkasten (10, 10') nach einem der Ansprüche 3 bis 8, wobei die Sammelplatte (51) eine Vertiefung (52) umfasst, die für den Eingang und den Ausgang des Fluids in der zweiten Kammer (12) bestimmt ist.

10. Sammelkasten (10, 10') nach Anspruch 9, wobei die Sammelplatte (10) eine Umfangsseite (53) umfasst, die die Vertiefung (52) umgibt und in Berührung mit einer Einfassung angeordnet ist, die die dritte Verformung (47) der Zwischenplatte (41) umgibt.

11. Sammelkasten (10, 10') nach Anspruch 9 oder 10, wobei die erste Verformung (44), die zweite Verformung (45) und die Vertiefung (52) jeweils mindestens einen Schlitz (46) umfassen, der geeignet ist, ein Zirkulationsrohr (2) des Fluids aufzunehmen.

12. Sammelkasten (10, 10') nach Anspruch 11, wobei der Deckel (31), die Zwischenplatte (41) und die Sammelplatte (51) im Wesentlichen rechteckig ausgebildet sind, wobei die Schlitze (46) eine Form aufweisen, die entlang einer Richtung im Wesentlichen parallel zu einer Längsachse (A) des Deckels (31), der Zwischenplatte (41) oder der Sammelplatte (51) gestreckt ist.

13. Wärmetauscher (1), **dadurch gekennzeichnet, dass** er mindestens einen Sammelkasten (10, 10') nach einem der vorhergehenden Ansprüche umfasst.

14. Wärmetauscher (1) nach Anspruch 13, wobei der Wärmetauscher ein Rohrbündel (2) zur Zirkulation des Fluids umfasst, wobei die Rohre (2) dieselbe Länge haben und ein erstes Längsende (2A), das in den Sammelkasten (10, 10') eindringt, besitzen.

15. Wärmetauscher (1) nach Anspruch 14, wobei die Rohre (2) extrudiert sind und eine Mehrzahl von Kanälen umfassen.

16. Wärmetauscher (1) nach Anspruch 14 oder 15, wobei die Rohre (2) eine im Wesentlichen längliche Form aufweisen, die durch zwei große Seiten, erste und zweite große Seite (61, 62) genannt, und durch zwei kleine Seiten (63, 64) begrenzt sind, wobei die Rohre (2) eingerichtet sind, damit sich die ersten großen Seiten (61) in ein und derselben Ebene erstrecken.

17. Wärmetauscher (1) nach einem der Ansprüche 13 bis 16, wobei der Wärmetauscher (1) eingerichtet ist, um das Fluid in der ersten Kammer (11) entlang einer ersten Richtung (13) und in der zweiten Kammer (12) entlang einer zweiten Richtung (14) mit entgegengesetzter Richtung zu der ersten Richtung (13) zirkulieren zu lassen.

18. Wärmetauscher (1) nach einem der Ansprüche 13 bis 17, wobei der Wärmetauscher (1) einen Eingangskasten (4), der einen Eingang (4') des Fluids umfasst, einen Ausgangskasten (5), der einen Ausgang (5') des Fluids umfasst, und einen Zwischenkasten (6) umfasst, derart, dass der Wärmetauscher (1) vier Durchgänge (21, 22, 23, 24) des Fluids definiert: einen ersten Durchgang (21) zwischen dem Eingangskasten (4) und der ersten Kammer (11), einen zweiten Durchgang (22) zwischen der ersten Kammer (11) und dem Zwischenkasten (6), einen dritten Durchgang (23) zwischen dem Zwischenkasten (6) und der zweiten Kammer (12), und einen vierten Durchgang (24) zwischen der zweiten Kammer (12) und dem Ausgangskasten (5).

19. Verfahren zum Herstellen eines Sammelkastens (10, 10') eines Wärmetauschers (1) nach einem der Ansprüche 1 bis 12, wobei der Sammelkasten (10, 10') einen Deckel (31), eine Zwischenplatte (41) und eine Sammelplatte (51) umfasst, wobei die Zwischenplatte (41) dazu bestimmt ist, mit dem Deckel (31) eine erste Kammer (11) des Fluids zu definieren, und mit der Sammelplatte (51) eine zweite Kammer (12) des Fluids, die von der ersten Kammer (11) unabhängig ist, **dadurch gekennzeichnet, dass** man den Deckel (31), die Zwischenplatte (41) und die Sammelplatte (51) tiefzieht und ein brechbares mechanisches Verbindungsmittel (71) zwischen dem Deckel (31), der Zwischenplatte (41) und der Sammelplatte (51) nach ein und demselben Formungsschritt bildet.

20. Verfahren nach Anspruch 19, wobei man das mechanische Verbindungsmittel (71) vor einem Zusammenfügen des Deckels (31) auf der Zwischenplatte (41) und der Sammelplatte (51) auf der Zwischenplatte (41) zum Bilden des Sammelkastens (10, 10') bricht.

## Claims

1. Header box (10, 10') of a heat exchanger (1), comprising a cover (31), an intermediate plate (41) and a header plate (51), the said header box (10) being intended to collect and to distribute a fluid, the intermediate plate (41) defining a first fluid chamber (11) with the cover (31) and a second fluid chamber (12), independent of the first (11), with the header plate (51), the header box being **characterized in that** the intermediate plate (41) comprises at least two slots (46), each of the slots being intended to receive a longitudinal end of a tube (2) of the heat exchanger (1).

2. Header box (10, 10') according to Claim 1, in which the intermediate plate (41) has a first face (42) and a second face (43) opposite to the first (42) and comprises a first deformation (44) intended to allow fluid to enter the first chamber (11) and a second deformation (45) intended to allow fluid to leave the first chamber (11).

3. Header box (10, 10') according to Claim 2, in which the intermediate plate (41) comprises a third deformation (47) situated between the first and the second deformations (44, 45) in a longitudinal direction (A) of the header box (10).

4. Header box (10, 10') according to Claim 3, in which the third deformation (47) projects with respect to the first face (42) of the intermediate plate (41), the first and the second deformations (44, 45) of the intermediate plate (41) projecting with respect to the second face (43) of the intermediate plate (41).

5. Header box (10, 10') according to Claim 3 or 4, in which the cover (31) comprises a cavity (32) able to allow the circulation of the fluid between the first deformation (44) and the second deformation (45).

6. Header box (10, 10') according to Claim 5, in which the cover (31) comprises an edge (33) situated at the periphery of the cavity (32) and arranged in contact with a border (49) of the intermediate plate (41) surrounding the first, second and third deformations (44, 45, 47).

7. Header box (10, 10') according to any one of Claims 3 to 6, in which the cover (31) is arranged opposite the first face (42) of the intermediate plate (41) in a position for covering the first, second and third deformations (44, 45, 47).

8. Header box (10, 10') according to any one of Claims 3 to 7, in which the header plate (51) is arranged opposite the second face (43) of the intermediate plate (41) in a position for covering the third deformation (47).

9. Header box (10, 10') according to any one of Claims 3 to 8, in which the header plate (51) comprises an indentation (52) intended to allow fluid to enter and leave the second chamber (12).

10. Header box (10, 10') according to Claim 9, in which the header plate (10) comprises a peripheral face (53) surrounding the indentation (52) and is arranged in contact with a border surrounding the third deformation (47) of the intermediate plate (41).

11. Header box (10, 10') according to Claim 9 or 10, in which the first deformation (44), the second deformation (45) and the indentation (52) each comprise at least one slot (46) able to receive a fluid circulation tube (2).

12. Header box (10, 10') according to Claim 11, in which the cover (31), the intermediate plate (41) and the header plate (51) are of substantially rectangular shape, the said slots (46) having an elongate shape in a direction substantially parallel to a longitudinal axis (A) of the cover (31), the intermediate plate (41) or the header plate (51).

13. Heat exchanger (1), **characterized in that** it comprises at least one header box (10, 10') according to any one of the preceding claims.

14. Exchanger (1) according to Claim 13, in which the said exchanger comprises a bundle of fluid circulation tubes (2), the said tubes (2) being of the same length and having a first longitudinal end (2A) penetrating into the said header box (10, 10').

15. Exchanger (1) according to Claim 14, in which the tubes (2) are extruded and comprise a plurality of ducts.

16. Exchanger (1) according to Claim 14 or 15, in which the tubes (2) have a substantially oblong shape delimited by two large faces, termed first and second large faces (61, 62), and two small faces (63, 64), the tubes (2) being arranged so that the first large faces (61) extend in the same plane.

17. Exchanger (1) according to any one of Claims 13 to 16, in which the said exchanger (1) is arranged to circulate the fluid in the first chamber (11) in a first direction (13) and in the second chamber (12) in a second direction (14) opposite to the first (13).

18. Exchanger (1) according to any one of Claims 13 to 17, in which the exchanger (1) comprises an inlet box (4) comprising a fluid inlet (4'), an outlet box (5) comprising a fluid outlet (5'), and an intermediate box (6), with the result that the said exchanger (1) defines four fluid passes (21, 22, 23, 24): a first pass (21) between the inlet box (4) and the first chamber (11), a second pass (22) between the first chamber (11) and the intermediate box (6), a third pass (23) between the intermediate box (6) and the second chamber (12), and a fourth pass (24) between the second chamber (12) and the outlet box (5).

19. Method for manufacturing a header box (10, 10') of a heat exchanger (1) according to any one of Claims 1 to 12, the said header box (10, 10') comprising a cover (31), an intermediate plate (41) and a header plate (51), the intermediate plate (41) being intended to define a first fluid chamber (11) with the cover (31) and a second fluid chamber (12), independent of the first (11), with the header plate (51), **characterized in that** the cover (31), the intermediate plate (41) and the header plate (51) are stamped, and **in that** a secable mechanical connection means (71) is formed between the cover (31), the intermediate plate (41) and the header plate (51) in the same forming step.

20. Method according to Claim 19, in which the mechanical connection means (71) is broken prior to assembling the cover (31) on the intermediate plate (41) and the header plate (51) on the intermediate plate (41) with the aim of forming the said header box (10, 10').
